# EUROPEAN PATENT SPECIFICATION

(11) **EP 0 824 871 B1**
(45) Date of publication and mention of the grant of the patent: **20.03.2002**
(21) Application number: 97500140.5
(22) Date of filing: 18.08.1997
(51) Int. Cl.: A23L 1/212

(54) **Process to obtain food compositions based on chufas (cyperus esculentus) and bananas, and compositions obtained**
Verfahren zur Gewinnung von Nahrungsmittelzusammensetzungen auf Grund von Chufas (Cyperus esculentus) und Bananen, und die gewonnenen Zusammensetzungen
Procédé pour obtenir des compositions à base de chufas (cyperus esculentus) et de bananes et compositions ainsi obtenues

(30) Priority: 22.08.1996 ES 9601834; 22.08.1996 ES 9601835
(43) Date of publication of application: 25.02.1998
(73) Proprietor: Coret Monros, Salvador, 46020 Valencia (ES)
(72) Inventor: Coret Monros, Salvador, 46020 Valencia (ES)
(74) Representative: Davila Baz, Angel

(56) References cited:
- EP-A- 0 323 667
- FRUITS, vol. 29, no. 12, - 1974 FRANCE, pages 821-822, XP002056519 DUPAIGNE P.: "A propos de l'extraction d'un jus de banane, en vue de la production de la biére de banane"
- DATABASE WPI Section Ch, Week 8626 Derwent Publications Ltd., London, GB; Class D13, AN 86-168670 XP002056520 & SU 1 197 628 A (NON-ALCOHOL DRINKS) , 15 December 1985
- DATABASE WPI Section Ch, Week 8730 Derwent Publications Ltd., London, GB; Class D13, AN 87-207686 XP002056521 & ES 8 704 717 A (IND LACTEAS CERVERA) , 1 July 1987

## Description

This invention is related to a process to obtain food compositions based on chufas (cyperus esculentus) and bananas, as well as of the compositions obtained.

The food products obtained according to the process of this invention is highly nutritive due to the composition of its basic fruits, namely chufas and bananas, included in its preparation, as well as its storage stability.

The process of this invention has an application in the industry for the preparation of food compositions, popularly known as chufa orgeat (hereinafter referred to as orgeat).

DUPAIGNE P: " A propos de l'extraction d'un jus de banane, en vue de la production de la biére de banane" FRUITS, vol.29, n°12, - 1974 FRANCE, pages 821-822., describes the production of banana beer, the use of citric acid and ascorbic acid is mentioned with the purpose of avoiding oxidation of banana.

EP 0 323 667 A (PROCTER & GAMBLE), describes a method for preparing calcium-supplemnted juices, with the purpose to obtain a useful beverage for the treatment of osteoporosis. This document mentions the use of citric and ascorbic acid but also it mentions the use of other components in order to obtain a beverage rich in calcium, with therapeutic use purposes.

Document DATABASE WPI, Section Ch, Week 8626.Derwert Publications Ltd.,London, GB;Class D13, AN 87-207686,XP-002056520 describes a non alcoholic beverage based upon apple juice and banana essence. This beverage contains apart from ascorbic and citric acid an enzyme.

The invention, by means of the process to be described later, represents an advance in the orgeat industry, since by means of using it, and with the inclusion of fruits like chufas and bananas, a highly nutritive, and conservation stable product is obtained.

As is already known, chufas consist of lipids, proteins, minerals and carbohydrates.

Approximately 85% of the lipids are unsaturated fatty acids, the most important being oleic acid (mono-unsaturated) (75%), and linoleic acid (poly-unsaturated) (10%). Hence, chufas do not contain cholesterol.

Linoleic acid is an essential fatty acid and its recommended daily ingestion is from 15 to 20 grams and its intervention is remarked in the synthesis of prostaglandins (modulators of all cellular activities, controlling the contraction of the smooth muscles, glandular secretions, reabsorption of water and electrolytes, neuro-transmission, aggregation of platelets, induction of fever and inflammatory responses).

The proteins constitute about 10% of the dry material. They share with fibre, the third place in ranking of the components of the tubercle. The most abundant aminoacid is arginine which contributes a high content of phenylalanine + tyrosine forming part of the composition of other aminoacids like leucine, isoleucine, lysine, methionine cystine, threonine, valine and thryptophane. In total contributes 41 g/100 g protein in essential aminoacids.

The contribution of minerals from chufas is important. Potassium is the macro-element found in greatest proportion (543.70 mg/100 chufa-soluble substance). Potassium plays an important role in most vital functions like cellular metabolism, proteic synthesis, glucide synthesis and neuromuscular excitability. Its main functions include the regulation of cellular water content, the activation role of enzymatic systems and the increase of neuro-muscular excitability.

The other important minerals include:

Phosphorous (285 mg/100 g chufa-s.s.) and calcium (103 mg/100 g chufa-s.s.). Calcium is fundamental in growth to obtain a good calcification of the bones, as well as for adults to prevent decalcification.

Magnesium (95.50 mg/100 g chufa-s.s.). Magnesium is found inside the cells, where it satisfies functions as an activator of several enzymes and also intervenes in the transmission of the nervous pulses of the motor plate. According to recent data, its importance in anti-stress should be mentioned.

Zinc (4.32 mg/100 g chufa-s.s.). This is a component of important enzymes like alkaline phosphatase and carbonic anhydrase. From 10 to 15 mg daily are considered necessary.

Iron (4.21 mg/100 g chufa-s.s.). Iron is necessary for the formation of hemoglobin. Each molecule of the latter contains one iron atom. The organism responds to iron deficiency with anaemia. Ferropenic anaemia is not only the first among all the different causes of anaemia, but also the main nutritional deficit in the Western world. From 10 to 15 mg daily are considered necessary. It is important to remember that milk contains a small amount of iron.

With respect to carbohydrates, starch is the most abundant in chufas. It represents between 30% and 40% of the tubercle weight. Free sugars follow in importance to starch. Saccharose constitutes almost all of them, being about 12.5% of the tubercle weight. Reducing sugars (Alpha-glucose, beta-glucose, fructose and galactose). Its essential function is energetic.

Most of the fiber contained by chufas is cellulose (8.5%). Vegetable fiber is the non-digestible and non-absorbable part of many foods of a vegetable origin. It consists of substances of different chemical composition, although most of them are polysaccharides. It is also called dietetic fiber and nutrient fiber. In spite of the fact that their component could be considered of little use, since they are eliminated with the faeces, in recent years their properties have been studied with great interest after it was published that very probably, there is a relation between the low ingestion of fibre and certain diseases.

For all that indicated above, we may conclude that orgeat is a nutritive product, having a high content of unsaturated fatty acids and especially linoleic acid making it a foodstuff, which, besides not contributing cholesterol, is suitable for diets of both adults and children. Its high energetic value should also be remarked reinforcing its use for children and sportsmen/women, and its high mineral content, especially potassium, which as has been mentioned above plays an important role in the nervous system. Likewise, its high fiber content makes it recommendable as an intestine regulator and prevents diseases like colon cancer. Its astringent capacity in cases of intestinal upsets is also known.

Due to its composition, orgeat may be a good substitute for milk due to the fact that it contains an adequate proportions of fats, but without contributing cholesterol, a high content of carbohydrates, minerals, including iron (milk lacks this mineral) and contains other essential aminoacids, although they may be completed with other proteins.

Regarding bananas, it is also known that their composition includes proteins, lipids, carbohydrates, fiber, minerals and vitamins, their low fat content being important. Their composition is as follows:

| | |
|---|---|
| Proteins | 1.4 g/100 g |
| Lipids | 0.5 g |
| Carbohydrates | 20 g |
| Fiber | 3 g |
| Phosphorous | 8 mg |
| Magnesium | 5 mg |
| Calcium | 11 mg |
| Iron | 0.6 mg |
| Zinc | 0.23 mg |
| Sodium | 3 mg |
| Potassium | 380 mg |
| Iodine | 2 µg |
| Vit C | 12 mg |
| Thiamine (B1) | 0.16 mg |
| Riboflavine (B2) | 0.08 mg |
| Nicotinic acid | 0.5 mg |
| Pyrioxine (B6) | 0.5 mg |
| Vit A | 0.6 mg |
| Free folic acid | 16 µg |

From this composition, the low content in fats, as well as proteins, vitamins, minerals and fiber should be mentioned.

Taking into account the composition of bananas, the products derived from them are especially recommended for growing teenagers, as well as persons performing physical exercises. Its content in fiber, proteins and magnesium is recommendable both for people subject to stress, and old people, considering its low concentration in lipids.

With this background, the object of this invention consists in providing a process for the preparation of a food composition based on chufas and bananas, where the characteristics of both fruits are taken advantage of, to enhance their benefits.

Specifically and in accordance with a first aspect, the invention provides a process to obtain a food composition based on chufas and bananas consisting of the following stages:
- crush the chufas to obtain orgeat at a low temperature, preferably at about 6°C; separate the starch by centrifuging and add, sodium caseinate, sugar and stabilizers;
- add an emulsifier, previously prepared in hot water, to the resulting orgeat;
- crush peeled bananas, with ascorbic and citric acids, and filter the resulting liquid;
- mix the chufa with the banana liquid with sugar and flavors; and
- sterilize the resulting composition under UHT conditions, for its further packing under aseptic conditions.

Therefore, according to a second embodiment, included only for information purposes, and does not form part of the present invention the invention provides a process to obtain a food composition based on bananas alone, consisting of the following stages:
- crush the peeled bananas, with ascorbic and citric acids and filter the resulting liquid:
   - homogenize the banana liquid with sugar and flavors; and
   - subject the resulting composition to sterilization under UHT conditions for its further packing under aseptic conditions.

The first problem to be mentioned in the preparation of this product based on bananas, is undoubtedly the enzymatic browning induced by polyphenolixidase. Browning is produced rapidly, once the bananas have been peeled.

To prevent browning, crushing is proceeded to in hot drinking water together with ascorbic and citric acids to inhibit the former. It is also necessary to proceed to peeling as quickly as possible.

Crushing so obtained, may be maintained several hours (about 4) without browning problems. In this period it is preferably not to stir.

Before proceeding to its conservation treatment, sugar and flavor will be added. For conservation, a sterilization process is applied, although not excessively strongly due the acid pH of the product.

Due to it being a natural product, it is necessary to slightly stir before emptying the container.

### Example 1

For the preparation of 2000 liters of product, on the basis of chufas and bananas, orgeat is obtained by crushing the chufas in drinking water at a proportion of 1 kg chufas for 6 liters of orgeat, to obtain 1000 liters of orgeat. Then, the starch is separated by centrifuging in a decanter and 123 kg of sugar are added, 2 kg sodium caseinate and 280 grams stabilizer based on disodium phosphate-sodium citrate.

In a separate container, 2.8 kg emulsifiers, based on esters of poly-unsaturated fatty acids are melted with water at 70ºC and the resulting mixture is added to the previously prepared orgeat.

Likewise, in another container, 136 kg peeled bananas are crushed and 285 g ascorbic acid and 100 g citric acid are added, after which, the liquid is filtered in a static filter.

The resulting banana liquid is then mixed with the orgeat and sugar and banana flavor added, after which, the mixture is submitted to the UHT process, being heated at 70ºC and homogenization at 200 bars, sterilization at 140ºC for 4 seconds and then cooled, followed aseptic packing of the product.

### Example 2

For the preparation of 1000 liters of product, based on bananas alone, 150 kg peeled bananas are crushed in water and 285 g ascorbic acid and 100 g citric acid are added, after which, the liquid is filtered in a static filter.

To the resulting banana liquid, 43 kilos of sugar and banana flavor are added, after which the mixture is submitted to a UHT process with heating at 70ºC and homogenization at 200 bars, sterilization at 138ºC, for 4 seconds, and then cooled. The product is then packed aseptically.

## Claims

1. Process for the obtention of a food composition based on chufas (cyperus esculentus) and bananas, **characterized in that** it includes the following stages:
- crush the chufas to obtain chufa orgeat at a low temperature, preferably at about 6°C; separate the starch by centrifuging; and add sodium caseinate, sugar and stabilizers;
- crush peeled bananas, with ascorbic and citric acids, and filter the resulting liquid;
- mix the chufa orgeat with the banana liquid, with sugar and flavours; and
- sterilize the resulting composition under UHT conditions, for its further packing under aseptic conditions.

2. Food composition based on chufas and bananas, obtainable in accordance with the process of claim 1.

## Patentansprüche

1. Verfahren zum Gewinnen einer Lebensmittelzusammensetzung basierend auf Erdmandeln (cyperus esculentus) und Bananen, **gekennzeichnet durch** die folgenden Schritte:
- Zerkleinern der Erdmandeln bei niedriger Temperatur, bevorzugt bei etwa 6°C, um Erdmandel-Orgeat zu erhalten, Separieren der Stärke **durch** Zentrifugieren und Hinzufügen von Natriumkaseinat, Zucker und Stabilisatoren;
- Zerkleinern geschälter Bananen mit Ascorbin- und Zitronensäure, und Filtern der entstehenden Flüssigkeit;
- Mischen des Erdmandel-Orgeats mit der Bananenflüssigkeit, mit Zucker und Geschmacksstoffen; und
- Sterilisieren der sich ergebenden Zusammensetzung unter UHT-Bedingungen zur weiteren Verpackung unter aseptischen Bedingungen.

2. Lebensmittelzusammensetzung basierend auf Erdmandeln und Bananen, die nach dem Verfahren nach Anspruch 1 erhalten wird.

## Revendications

1. Procédé d'obtention d'une composition alimentaire à base de souchets (Cyperus esculentus) et de bananes **caractérisé en ce qu'**il inclut les étapes suivantes:
- écraser les souchets pour obtenir un orgeat de souchet à basse température, de préférence à environ 6°C ; séparer l'amidon par centrifugation ; et ajouter du caséinate de sodium, du sucre et des stabilisateurs ;
- écraser des bananes pelées, avec des acides ascorbique et citrique, et filtrer le liquide résultant ;
- mélanger l'orgeat de souchet avec le liquide à base de bananes, avec du sucre et des arômes ; et
- stériliser la composition résultante dans des conditions de UHT, pour son emballage subséquent dans des conditions aseptiques.

2. Composition alimentaire à base de souchets et de bananes pouvant être obtenue par le procédé selon la revendication 1.
